# EUROPÄISCHE PATENTSCHRIFT

(11) **EP 1 660 303 B1**
(45) Veröffentlichungstag und Bekanntmachung des Hinweises auf die Patenterteilung: **23.09.2009**
(21) Anmeldenummer: 04762729.4
(22) Anmeldetag: 30.08.2004
(51) Int. Cl.: B29C 49/58, B29C 49/12

(54) **VERFAHREN UND VORRICHTUNG ZUR BLASFORMUNG VON BEHÄLTERN**
METHOD AND DEVICE FOR BLOW MOLDING CONTAINERS
PROCEDE ET DISPOSITIF DE MOULAGE PAR SOUFFLAGE DE RECIPIENTS

(30) Priorität: 05.09.2003 DE 10340915; 26.01.2004 DE 102004003939
(43) Veröffentlichungstag der Anmeldung: 31.05.2006
(73) Patentinhaber: KHS Corpoplast GmbH & Co. KG, 20539 Hamburg (DE)
(72) Erfinder: JAKSZTAT, Wolf, 22547 Hamburg (DE); LINKE, Michael, 22926 Ahrensburg (DE); BAUMGARTE, Rolf, 22926 Ahrensburg (DE); LITZENBERG, Michael, 21502 Geesthacht (DE); VOGEL, Klaus, 22885 Barsbüttel (DE); GODAU, Günther, 22145 Hamburg (DE)
(74) Vertreter: Klickow, Hans-Henning
(86) Internationale Anmeldenummer: PCT/DE2004/001916
(87) Internationale Veröffentlichungsnummer: WO 2005/023520

(56) Entgegenhaltungen:
- US-A- 5 182 122
- PATENT ABSTRACTS OF JAPAN Bd. 2000, Nr. 21, 3. August 2001 (2001-08-03) & JP 2001 088202 A (HOKKAI CAN CO LTD), 3. April 2001 (2001-04-03)
- PATENT ABSTRACTS OF JAPAN Bd. 2000, Nr. 15, 6. April 2001 (2001-04-06) & JP 2000 343590 A (TOYO SEIKAN KAISHA LTD), 12. Dezember 2000 (2000-12-12)

## Beschreibung

Die Erfindung betrifft ein Verfahren zur Blasformung von Behältern, bei dem ein Vorformling nach einer thermischen Konditionierung innerhalb einer Blasform von einer Reckstange gereckt und durch Blasdruckeinwirkung in den Behälter umgeformt wird und bei dem unter Druck stehendes Gas durch die Reckstange hindurch in den Behälter eingeleitet wird.

Die Erfindung betrifft darüber hinaus eine Vorrichtung zur Blasformung von Behältern, die mindestens eine Blasstation mit einer Blasform sowie mindestens einer Reckstange aufweist, sowie bei der die Reckstange an eine Versorgungseinrichtung zur Zufuhr von unter Druck stehendem Gas angeschlossen ist.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine An-wendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Eine detaillierte Beschreibung eines Recksystems einer Blasstation mit zugeordneter Reckstange erfolgt in der DE-OS 101 45 579. Die Reckstange ist hier als ein massiver Stab ausgebildet und die Blasluft wird der Blasform durch einen Anschlußkolben hindurch zugeführt, der einen größeren Innendurchmesser aufweist, als der Außendurchmesser der Reckstange beträgt. Hierdurch wird zwischen der Reckstange und einer Innenfläche des Anschlußkolbens ein Ringspalt bereitgestellt, durch den das unter Druck stehende Gas hindurchströmen kann.

Die Verwendung einer hohlen Reckstange ist beispielsweise aus der DE-OS 28 14 952 bekannt. Ein Anschluß für das unter Druck stehende Gas erfolgt hier über ein einer Reckstangenkuppe abgewandtes Ende der rohrartig ausgebildeten Reckstange. Eine Druckgaszuführung über das Ende einer hohlen Reckstange wird darüber hinaus in der DE 34 08 740 C2 beschrieben.

Die bekannten Druckgaszuführungen können bislang noch nicht alle Anforderungen gemeinsam erfüllen, die bei ständig zunehmenden Produktionsraten gestellt werden. Die Druckgaszuführungen erfolgen gemäß dem Stand der Technik bislang derart, daß entweder das gesamte für die Expansion des Vorformlings benötigte Druckgas durch einen die Reckstange umgebenden Ringspalt oder bei der Verwendung von hohlen Reckstangen durch die Reckstange hindurch erfolgt.

Aus den PATENT ABSTRACTS OF JAPAN Bd. 2000, Nr. 21, 3. August 2001 (2001-08-03) & JP 2001 088202 A (HOKKAI CAN CO LTD), das ein Verfahren gemäß dem Oberbegriff des Anspruchs 1 und eine Vorrichtung gemäß dem Oberbegriff des Anspruchs 10 offenbart, ist es bereits bekannt, eine Reckstange mit einer Mehrzahl von Ausströmöffnungen zu versehen, die unterschiedliche Strömungswege aus einem Innenraum der Reckstange heraus in den Innenraum des Behälters hinein bereitstellen. Die Ausströmöffnungen dienen insbesondere zur Zuleitung eines Kühlgases, um eine Thermostabilisierung des Behälters nach einem Abschluß des Blasvorganges durchzuführen.

Aus der US 5,182,122 A ist bereits eine hohle Reckstange bekannt, die einen koaxialen Aufbau mit zwei Strömungskanälen besitzt. Durch den inneren Kanal wird flüssiger Stickstoff und durch den äußeren Kanal warme Isolationsluft in den geblasenen Behälter eingeleitet. Eine Zufuhr von Blasluft erfolg außenseitig entlang der Reckstange durch einen die Reckstange umgebenden Ringspalt hindurch. Anschlüsse für die warme Isolationsluft und den flüssigen Stickstoff sind an einem der Blasform abgewandten Ende der Reckstange angeordnet.

Aus den PATENT ABSTRACTS OF JAPAN Bd. 2000, Nr. 15, 6. April 2001 (2001-04-06) & JP 2000 343590 A (TOYO SEIKAN KAISHA LTD) ist es bekannt, durch eine Reckstange hindurch Kühlluft zur Durchführung einer Thermostabilisierung bis in den Bereich eines Behälterbodens zu leiten. Die Kühlluftzuführung erfolgt im Anschluß an eine Blasformung des Behälters.

Aufgabe der vorliegenden Erfindung ist es, ein Verfahren der einleitend genannten Art derart anzugeben, daß eine verringerte Prozeßzeit bei der Behälterformung erreicht wird.

Diese Aufgabe wird erfindungsgemäß dadurch gelöst, daß das unter Druck stehende Gas zur Blasformung über mindestens zwei unterschiedliche Strömungswege in den Behälter eingeleitet wird, wobei einer dieser Strömungswege durch die Reckstange hindurch und einer der Strömungswege an der Reckstange vorbei verläuft.

Weitere Aufgabe der vorliegenden Erfindung ist es, eine Vorrichtung der einleitend genannten Art derart zu konstruieren, daß eine gesteigerte Produktivität je verwendeter Blasstation erreicht werden kann.

Diese Aufgabe wird erfindungsgemäß dadurch gelöst, daß die Blasstation mindestens zwei unterschiedliche bis in den von der Blasform umschlossenen Raum hinführende Strömungswege für das unter Druck stehende Gas aufweist, wobei hiervon ein Strömungsweg durch die Reckstange hindurch und ein Strömungsweg außenseitig an der Reckstange vorbei verläuft.

Durch die Verwendung von zwei unterschiedlichen Strömungswegen für das zur Blasverformung des Vorformlings in den Behälter verwendete Druckgas ist es möglich, im Hinblick auf die Umformung des thermoplastischen Materials optimierte Prozeßbedingungen zu erreichen. Die in den Behälter einströmende Druckluft führt nicht nur zu einer Expansion des Vorformlings, sondern gleichzeitig erfolgt durch das am Material des Vorformlings sowie an der sich entwickelnden Behälterblase vorbeiströmende Druckgas eine Abkühlung des Behältermaterials.

Die Abkühlung des Behältermaterials ist in denjenigen Bereichen erwünscht, wo der Vorformling zumindest bereits näherungsweise die endgültige Gestaltung des Behälters angenommen hat. Unerwünscht ist eine Abkühlung des Behältermaterials jedoch in denjenigen Bereichen, in denen noch eine stärkere Verformung des Materials erforderlich ist. Durch die in die Blasform hineinführenden getrennten Strömungswege ist es möglich, die Druckgaseinströmung in den Behälter derart zu steuern, daß eine zeitliche Optimierung der durch die Druckgaseinströmung erreichten Abkühlung des Behältermaterials bei gleichzeitig kurzer Füllzeit erreicht wird.

Eine örtlich und zeitlich optimierte Kühlwirkung durch das einströmende Druckgas wird dadurch unterstützt, daß das unter Druck stehende Gas wenigstens zeitweise über nur einen der Strömungswege zugeführt wird.

Unter Berücksichtigung der Geometrie einer sich entwikkelnden Behälterblase erweist es sich als vorteilhaft, daß das unter Druck stehende Gas in einer ersten Prozeßphase in der Nähe des Mündungsabschnittes in den Vorformling eingeleitet wird.

Ein geringer Strömungswiderstand während einer Vorblasphase wird dadurch erreicht, daß das unter Druck stehende Gas während der ersten Prozeßphase durch einen die Reckstange umgebenden Strömungsweg eingeleitet wird.

Eine örtlich exakt definierte Druckgaszuführung wird auch dadurch unterstützt, daß das unter Druck stehende Gas in einer zweiten Prozeßphase durch die Reckstange hindurch eingeleitet wird.

Unter Berücksichtigung einer sich bei der Blasverformung ergebenden Materialverteilung erweist es sich als besonders zweckmäßig, daß das unter Druck stehende Gas während der zweiten Prozeßphase in der Nähe eines Bodens des Behälters eingeleitet wird.

Eine weitere Prozeßoptimierung kann dadurch erfolgen, daß während der zweiten Prozeßphase das unter Druck stehende Gas mit einem höheren Druck als während der ersten Prozeßphase eingeleitet wird.

Ein sehr kurzfristiger Druckabbau nach einer erfolgten Behälterformung wird dadurch erreicht, daß eine Druckableitung nach einem vorhergehenden Zurückziehen der Reckstange durchgeführt wird.

Eine weitere Variante zur Unterstützung der Kühlwirkung besteht darin, daß eine Druckableitung mindestens teilweise durch die Reckstange hindurch erfolgt.

Eine erhöhte mechanische Stabilität der Reckstange durch Vergrößerung des Stangendurchmessers kann dadurch erreicht werden, daß mindestens zwei Strömungswege durch die Reckstange hindurch verlaufen.

Ein erster Strömungsweg kann dadurch bereitgestellt werden, daß ein Strömungsweg in der Nähe einer Zugangsöffnung der Blasform in die Blasform einmündet.

Weitere Möglichkeiten zur zeitlichen Prozeßoptimierung werden dadurch bereitgestellt, daß ein Strömungsweg wenigstens zeitweise in der Nähe eines Bodenteiles der Blasform in einen von der Blasform umschlossenen Innenraum einmündet.

Eine typische Ausführungsform besteht darin, daß der erste Strömungsweg zur Zufuhr von Druckgas für die Behälterformung ausgebildet ist.

Ebenfalls ist typischerweise daran gedacht, daß der zweite Strömungsweg für die Zufuhr von Druckgas zur Behälterformung ausgebildet ist.

Insbesondere erweist es sich als zweckmäßig, daß mindestens zwei Strömungswege zur Zufuhr von unter Druck stehendem Gas mit unterschiedlichen Druckhöhen ausgebildet sind.

Ein verschleißarmer Anschluß des Reckstangeninnenraumes an die bereitgestellten versorgungskanäle kann dadurch erfolgen, daß die Reckstange einen von Seitenwandungen umschlossenen Innenraum aufweist und daß der Innenraum durch eine Mehrzahl von Ausnehmungen in der Wandung an eine Druckgasversorgung angeschlossen ist.

Eine gesteuerte Vorgabe der jeweiligen Strömungswege sowie der Strömungszeiten kann dadurch erfolgen, daß im Bereich jedes Strömungsweges mindestens ein Stellelement zur Realisierung einer Ventilfunktion angeordnet ist.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine Seitenansicht einer Blasstation, bei der eine Reckstange von einem Reckstangenträger positioniert wird,
- Fig. 6: eine vergrößerte und teilweise geschnittene Darstellung eines oberen Bereiches der Reckstangenführung der Reckstange,
- Fig. 7: eine vergrößerte Darstellung der Einzelheit VII in Fig. 6,
- Fig. 8: eine vergrößerte Darstellung der Einzelheit VIII in Fig. 6,
- Fig. 9: eine gegenüber Fig. 2 stärker detaillierte Darstellung eines Längsschnittes durch die Blasstation zur Veranschaulichung von zwei unterschiedlichen Strömungswegen für das Druckgas und
- Fig. 10: ein Blockschaltbild zur veranschaulichung der Druckluftversorgung der Blasstation.

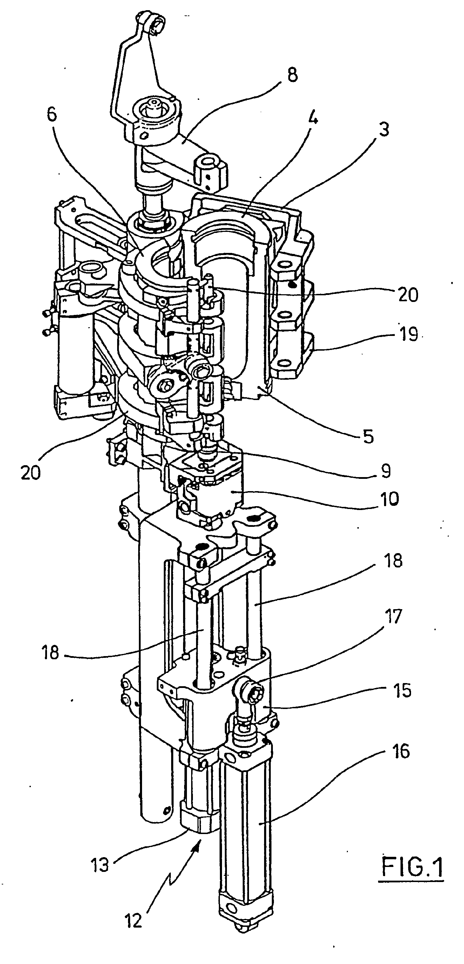

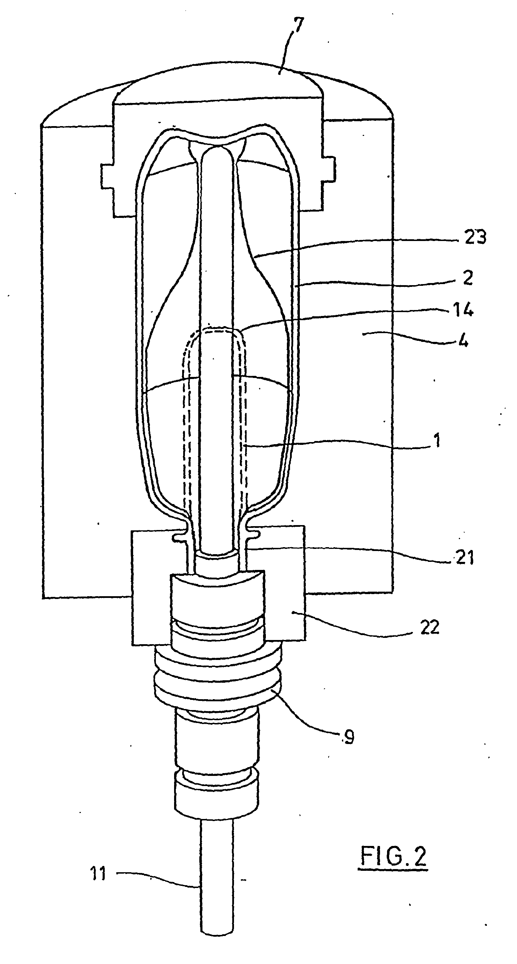

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind.

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den vorformling (1) und schematisch eine sich entwickelnde Behälterblase (23).

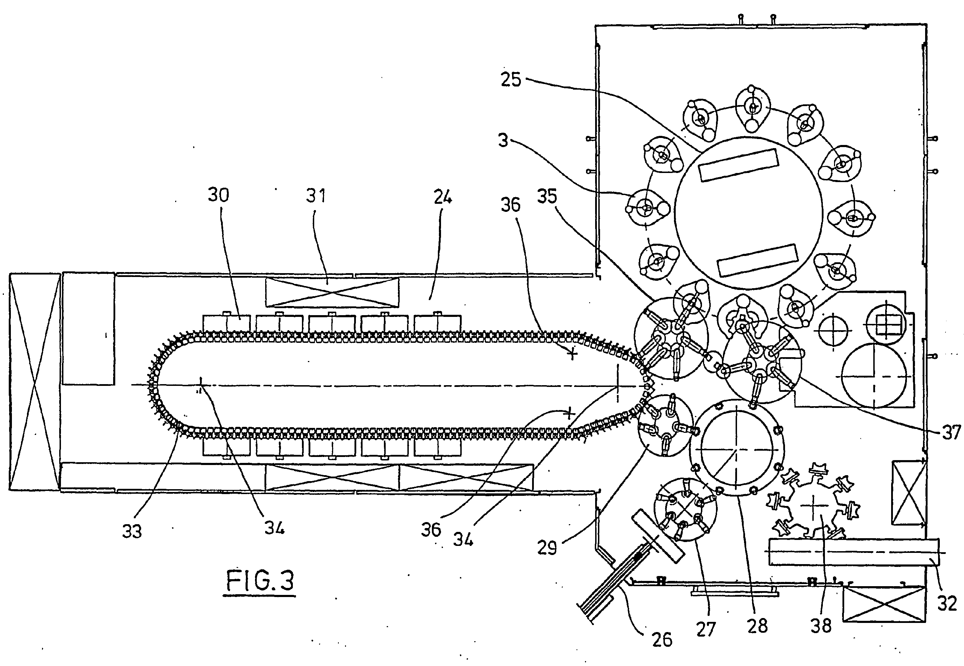

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen.

Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

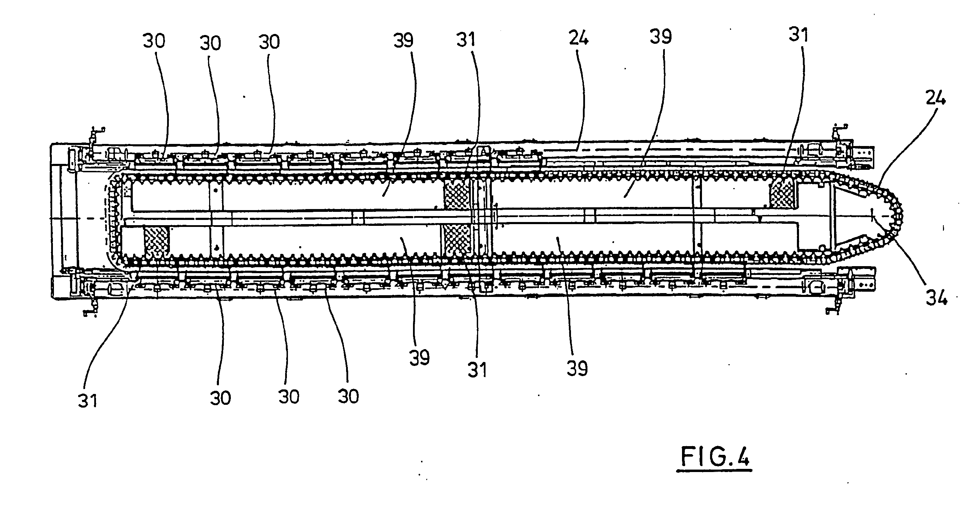

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

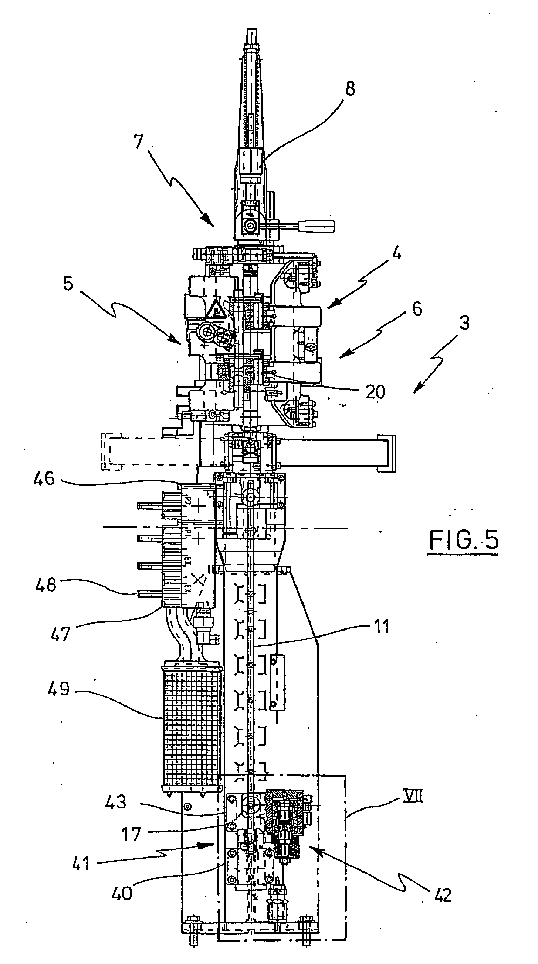

Fig. 5 zeigt eine gegenüber der Darstellung in Fig. 1 abgewandelte Darstellung der Blasstation (3) bei einer Blickrichtung von vorne. Insbesondere ist aus dieser Darstellung erkennbar, daß die Reckstange (11) von einem Reckstangenträger (41) gehaltert ist, der aus einem Trägersockel (40) und einem über ein Kupplungselement (42) mit dem Trägersockel (40) verbundenen Rollenträger (43) ausgebildet ist. Der Rollenträger (43) haltert die Führungsrolle (17), die zur Positionierung des Recksystems dient. Die Führungsrolle (17) wird entlang einer nicht dargestellten Kurvenbahn geführt. Es ist hier eine vollständige mechanische Steuerung des Reckvorganges realisiert.

Das in Fig. 5 veranschaulichte Kupplungselement (42) kann auch bei der Ausführungsform gemäß Fig. 1 zur Ermöglichung einer vollständigen mechanischen Entkopplung der Zylinder (12) voneinander bzw. von einem Tragelement für die Führungsrolle (17) eingesetzt werden.

Fig. 5 veranschaulicht einen eingerasteten Zustand des Kupplungselementes (42), in dem der Trägersockel (40) und der Rollenträger (43) miteinander durch das Kupplungselement (42) verbunden sind. Es liegt hierdurch eine starre mechanische Kopplung vor, die dazu führt, daß eine Positionierung der Führungsrolle (17) direkt und unmittelbar in eine Positionierung der Reckstange (11) umgesetzt wird. Es liegt hierdurch in jedem Bewegungszustand des Blasrades (25) eine exakt vorgegebene Positionierung der Reckstange (11) vor und die Positionierung der Reckstange (11) wird bei einer Mehrzahl von auf dem Blasrad (25) angeordneten Blasstationen (3) bei jeder Blasstation (3) exakt reproduziert. Diese exakte mechanische Vorgabe der Positionierung der Reckstange (11) trägt zu einer hohen Produktqualität sowie zu einer hohen Gleichmäßigkeit der hergestellten Behälter (2) bei.

Fig. 5 zeigt ebenfalls die Anordnung eines Pneumatikblockes (46) zur Blasdruckversorgung der Blasstation (3). Der Pneumatikblock (46) ist mit Hochdruckventilen (47) ausgestattet, die über Anschlüsse (48) an eine oder mehrere Druckversorgungen angeschlossen werden können. Nach einer Blasformung der Behälter (2) wird in eine Umgebung abzuleitende Blasluft wird über den Pneumatikblock (46) zunächst einem Schalldämpfer (49) zugeführt.

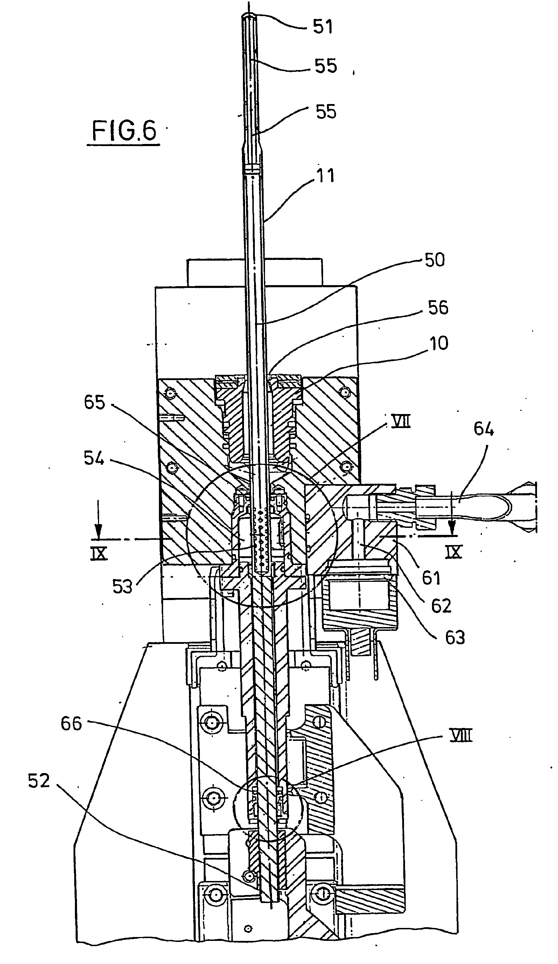

Fig. 6 veranschaulicht, daß die Reckstange (11) mit einem Stangeninnenraum (50) versehen ist, in den Durchgangsöffnungen (53) einmünden, die in einem zwischen einer Reckstangenkuppe (51) und einem der Reckstangenkuppe (51) abgewandt angeordneten Reckstangenende (52) positioniert sind. Bei der in Fig. 6 veranschaulichten Positionierung der Reckstange (10) stellen die Durchgangsöffnungen (53) eine Verbindung zwischen dem Stangeninnenraum (50) und einer Druckkammer (54) her.

Im Bereich eines der Reckstangenkuppe (51) zugewandten Bereiches der Reckstange (11) sind Ausströmöffnungen (55) positioniert. Bei dem in Fig. 6 dargestellten Ausführungsbeispiel erstreckt sich im Bereich des Anschlußkolbens (10) um die Reckstange (11) herum ein Ringspalt (56), so daß bei dieser Ausführungsform eine Druckgaszuführung sowohl durch den Stangeninnenraum (50) als auch durch den Ringspalt (56) hindurch erfolgen kann.

Im Bereich eines Ventilblockes (61) ist ein Zufuhrkanal angeordnet, der ein Steuerventil (63) mit einer Gaszuführung (64) verbindet. Über das Steuerventil (63) wird die Gaszufuhr zur Druckkammer (54) gesteuert.

Eine Abdichtung der Reckstange (11) hinsichtlich einer Umgebung erfolgt über Stangendichtungen (65, 66). Innerhalb des von den Stangendichtungen (65, 66) begrenzten Druckraumes ist eine abgedichtete Führung des mit den Durchgangsöffnungen (53) versehenen Bereiches der Reckstange (11) möglich.

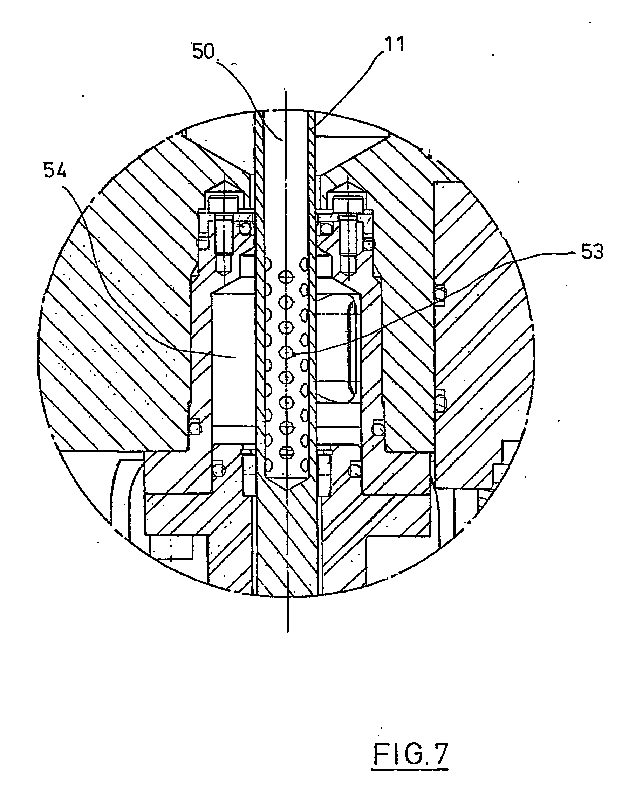

Aus Fig. 7 ist der Aufbau der Reckstange (11) im Bereich der Durchgangsöffnungen (53) sowie die konstruktive Gestaltung der Druckkammer (54) in einer vergrößerten Darstellung zu erkennen. Die Durchgangsöffnungen (53) sind beim dargestellten Ausführungsbeispiel in Richtung einer Längsachse (57) der Reckstange (11) reihenartig hintereinander angeordnet. Mehrere derartige Reihen sind entlang des Umfanges der Reckstange (11) relativ zueinander mit einem Abstand angeordnet. Insbesondere ist daran gedacht, die gebildeten Reihen in Richtung der Längsachse (57) derart relativ zueinender versetzt anzuordnen, daß ein Versatz um die Hälfte eines Mittellinienabstandes der Durchgangsöffnungen (53) vorliegt. Hierdurch werden die Durchgangsöffnungen (53) einer Reihe von Durchgangsöffnungen (53) jeweils im Schwerpunkt von rechteckförmigen Bezugsflächen angeordnet, die von jeweils zwei Durchgangsöffnungen (53) benachbarter Reihen aufgespannt werden. Diese Anordnung unterstützt eine gleichmäßige Strömung.

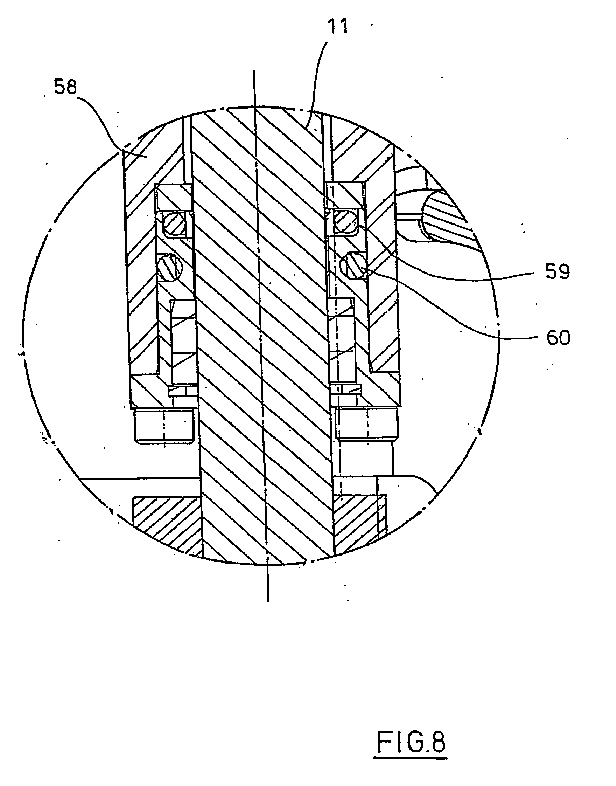

Aus der vergrößerten Darstellung in Fig. 8 ist die abgedichtete Führung der Reckstange (11) im Bereich eines Trägers (58) zu erkennen. Es werden hierzu Dichtungen (59, 60) verwendet, wobei die Dichtung (59) als Stangendichtung und die Dichtung (60) als O-Ring ausgebildet sein kann. Eine Stangendichtung besteht aus einem harten Ring und einen O-Ring aus Weichmetall.

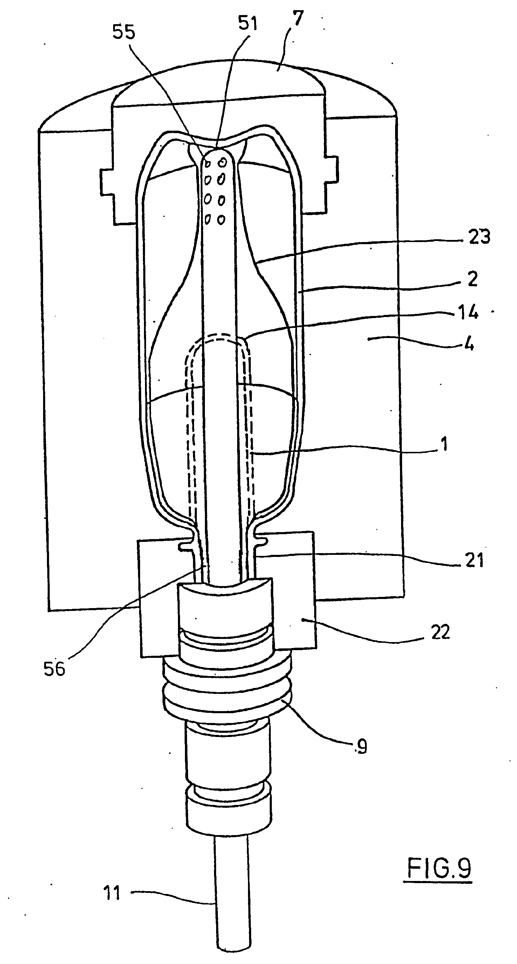

Fig. 9 veranschaulicht nochmals die Anordnung der Ausströmöffnungen (55) der Reckstange (11) in einem der Reckstangenkuppe (51) zugewandten Bereich der Reckstange (11) sowie die Anordnung des Ringspaltes (56) im Bereich des Mündungsabschnittes (21). Durch diese Anordnung ist es insbesondere möglich, zu Beginn des Blasformungsvorganges durch den Ringspalt (56) Druckluft in den Vorformling (1) bzw. die sich entwickelnde Behälterblase (23) einzuleiten und anschließend die Druckgaseinleitung durch die Ausströmöffnungen (55) der Reckstange (11) hindurch fortzusetzen. Die Anordnung der Ausströmöffnungen (55) erfolgt vorzugsweise in einem sich an die Reckstangenkuppe (51) anschließenden Bereich der Reckstange (11) mit einer Bereichsausdehnung von etwa 10 cm in Richtung der Längsachse (57).

Fig. 9 veranschaulicht, daß bei einer typischen Behälterblase (23) diese sich bereits in einem relativ frühen Formungszustand in einer Umgebung des Mündungsabschnittes (21) der Blasform (4) nähert bzw. bereits an der Blasform (4) anliegt. In Abhängigkeit von der Geometrie des jeweils blaszuformenden Behälters (2) kann im Anschluß an die Druckgaszuführung nur über den Ringspalt (56) die weitere Druckgaseinleitung allein über die Ausströmöffnungen (55) der Reckstange (11) erfolgen, es ist aber auch möglich, zumindest zeitweilig das Druckgas sowohl über den Ringspalt (56) als auch über die Ausströmöffnungen (55) zuzuführen.

Eine Druckgaszuführung gleichzeitig über die Ausströmöffnungen (55) und den Ringspalt (56) ermöglicht aufgrund der Parallelschaltung der Strömungswege eine Druckgaszuführung mit geringerem Strömungswiderstand und somit geringerem Zeitbedarf. Eine Druckgaszuführung im zweiten zeitlichen Abschnitt der Blasverformung allein über die Ausströmöffnung (55) unterstützt eine Kühlung im Bereich des Bodens des Behälters (2), der prozeßbedingt wesentlich dicker als die Seitenwände des Behälters (2) ausgebildet wird und hierdurch stärker gekühlt werden muß, um eine ausreichende Materialstabilität zu erreichen.

Grundsätzlich ist es somit möglich, zunächst das Druckgas ausschließlich über den ersten Strömungsweg und anschließend über den zweiten Strömungsweg zuzuführen, es ist aber auch möglich, während der zweiten Phase der Blasverformung die Druckgaszuführung über beide Strömungswege vorzunehmen oder zunächst eine Zwischenphase mit gleichzeitiger Druckgaszuführung durch beide Strömungswege und anschließend eine Umformungsphase mit ausschließlicher Druckgaszuführung über den zweiten Strömungsweg durchzuführen.

Gemäß einer bevorzugten Verfahrensvariante wird über den ersten Strömungsweg Druck eines niedrigeren Druckniveaus, beispielsweise mit einem Druck im Bereich von 5 bis 20 bar, und im Bereich des zweiten Strömungsweges Druckgas eines höheren Druckniveaus, beispielsweise mit einem Druck von etwa 40 bar zugeführt. Der niedrigere Druck kann aus dem höheren Druck über einen Druckwandler abgeleitet werden. Prinzipiell ist es auch möglich, die Querschnittgestaltung des ersten Strömungsweges derart zu gestalten, daß auch der erste Strömungsweg an den höheren Druck angeschlossen wird und der bereitgestellte Strömungswiderstand die beabsichtigte Druckreduzierung verursacht.

Alternativ zu der in Fig. 9 dargestellten Anordnung des ersten Strömungsweges als die Reckstange (11) umgebender Ringspalt (56) ist es auch möglich, die Reckstange (11) mit einem größeren Durchmesser zu versehen und im Inneren der Reckstange (11) die getrennten Strömungswege anzuordnen. Die Reckstange würde hierzu vorteilhafter weise bei der in Fig. 9 dargestellten Positionierung oberhalb des Mündungsabschnittes (21) mit Ausströmöffnungen versehen werden, die in den ersten Strömungsweg einmünden. Die in Fig. 9 dargestellten Ausführungsform weist aber den Vorteil auf, daß nur ein relativ kleiner Anteil der Querschnittfläche des Mündungsabschnittes (21) vom wandungsmaterial der Reckstange (11) ausgefüllt ist und hierdurch der vergleichsweise große Rest der Querschnittfläche für die beiden Strömungswege zur Verfügung steht.

Alternativ oder ergänzend zur Zuführung von Druckgas mit unterschiedlichen Druckhöhen über die beiden Strömungswege ist es auch möglich, eine Zuführung von Druckgas mit unterschiedlichen Temperaturen vorzunehmen. Insbesondere ist daran gedacht, während einer ersten Prozeßphase Druckgas einer höheren Temperatur als während einer zweiten Prozeßphase zuzuführen.

Eine Kühlwirkung während der zweiten Prozeßphase kann durch eine geeignete Gestaltung der Strömungswege sowie der Ausströmöffnungen (55) unterstützt werden. Als besonders vorteilhaft erweist es sich, daß die geometrische Gestaltung der Strömungswege derart gewählt wird, daß während der Druckgasströmung durch die Reckstange hindurch im Stangeninnenraum (50) ein möglichst hohes Druckniveau beibehalten wird und sich entlang der Ausströmöffnungen (55) ein großer Druckgradient einstellt. Es erfolgt hierdurch eine Gasexpansion in den Behälter hinein örtlich dicht am Boden des Behälters (2), so daß die Expansionskälte zusätzlich zu einer Kühlung des Behälterbodens genutzt werden kann.

Vor einem Ablassen des Druckgases aus dem Innenraum des Behälters (2) ist es möglich, zunächst die Reckstange (11) vollständig aus dem Innenraum der Blasform (4) zurückzuziehen und hierdurch die gesamte Querschnittfläche des Mündungsabschnittes (21) für das ausströmende Gas zur Verfügung zu stellen. Hierdurch wird eine schnelle Druckabsenkung unterstützt, die zu einer Abkühlung des innerhalb des Behälters (2) befindlichen Gases und hierdurch zu einer zusätzlichen Kühlung des wandungsmaterials des Behälters (2) führt.

Alternativ ist es aber ebenfalls denkbar, die Reckstange wenigstens während eines Teiles der für die Druckgasableitung erforderlichen Zeitspanne in der in Fig. 9 dargestellten Positionierung oder in einer geringfügig abgesenkten Positionierung zu belassen und zumindest einen Teil des Druckgases durch die Ausströmöffnungen (55) in den Innenraum der Reckstange (11) zurückzuleiten. Hierdurch wird innerhalb des Behälters (2) bei der Druckgasableitung eine Gasströmung in Richtung auf den Boden des Behälters (2) erzeugt und ein zusätzlicher Kühleffekt erreicht. Die jeweils optimale Verfahrensvariante wird auch hier in Abhängigkeit von der konkret vorliegenden Geometrie des Behälters (2) gewählt.

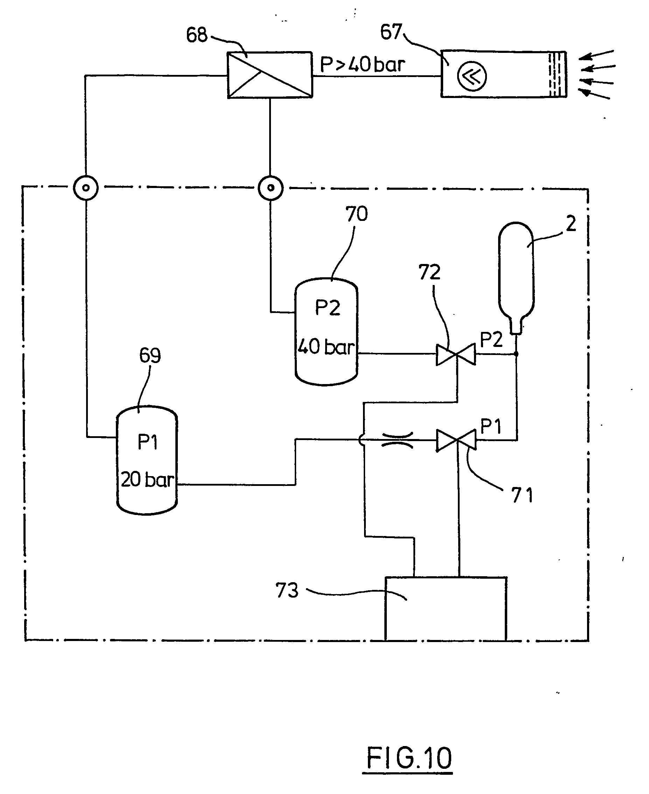

Fig. 10 zeigt schematisch ein Blockschaltbild der Druckgasversorgung. Der eingezeichnete Behälter (2) wurde gleichzeitig auch stellvertretend für den Vorformling (1) sowie die Behälterblase (23) abgebildet. Über einen Kompressor (67) wird Druck eines Ausgangsdruckniveaus, beispielsweise oberhalb von 40 bar bereitgestellt. Über einen oder mehrere Druckwandler (68) erfolgt beim dargestellten Ausführungsbeispiel eine Druckabsenkung auf zwei unterschiedliche Versorgungsdruckniveaus. Das höhere Druckniveau beträgt hier etwa 40 bar, das niedrigere Druckniveau etwa 20 bar.

Über Kessel (69, 70) wird ein Vorratsvolumen für die jeweiligen Drücke bereitgestellt, so daß auch bei einer getakteten Druckentnahme das jeweilige Druckniveau zumindest näherungsweise aufrecht erhalten bleibt. Die gesteuerte Druckgaszuführung erfolgt unter Verwendung von Ventilen (71, 72). Die Ventile (71, 72) sind an eine Steuerung (73) angeschlossen, die die jeweiligen Schaltzeiten der Ventile (71, 72) koordiniert.

Gemäß der vorliegenden Erfindung ist insbesondere daran gedacht, daß der durch die Reckstange (11) hindurch verlaufende zweite Strömungsweg ausschließlich in einem Bereich des Reckstangenendes (52) in den Behälterinnenraum einmündet. Es befinden sich somit entlang der Längsausdehnung der Reckstange (11) zwischen der Einmündung der Reckstange (11) in den Innenraum des Behälters (2) und dem Bereich des Reckstangenendes (52) keine Ausströmöffnungen. Typischerweise befinden sich die Ausströmöffnung oder die Ausströmöffnungen des zweiten Strömungsweges in einem Bereich des Reckstangenendes (52) mit einer maximalen Entfernung von der Reckstangenkuppe von etwa 2,5 cm. Besonders bevorzugt ist es, die Ausströmöffnung oder die Ausströmöffnungen mit einem maximalen Abstand zur Reckstangenkuppe (51) von etwa 1,0 cm anzuordnen.

Die obigen Ausführungen hinsichtlich der Leitung der Blasluft über den zweiten Strömungsweg in Richtung auf den Boden des Behälters (2) bezieht sich auf eine Strömungsführung für mindest den überwiegenden Anteil der Blasluft. Dies schließt selbstverständlich nicht aus, daß geringe Anteile über Undichtigkeiten, gering dimensionierten Nebenöffnungen oder andere nebengeordnete Strömungswege in den Innenraum des Behälters (2) eintreten können. Vorteilhaft ist jedoch eine Strömungsführung für einen möglichst großen Anteil der Blasluft in Richtung auf den Boden des Behälters (2).

Zur Unterstützung einer Optimierung des Blasvorganges erfolgt eine anwendungsabhängige Abstimmung der Volumenanteile des Blasgases, die dem Innenraum des Behälters (2) über den ersten und zweiten Strömungsweg zugeführt werden. Aufgrund des zum Ende des Blasvorganges höheren Druckes ist es generell vorteilhaft, über den zweiten Strömungsweg einen größeren Volumenanteil relativ zur Befüllmenge des Behälters (2) bei einer maximalen Druckbeaufschlagung zuzuführen.

Ebenfalls erfolgt eine Optimierung hinsichtlich des Zeitpunktes der Umschaltung der Strömungsführung über den ersten Strömungsweg und den zweiten Strömungsweg. Generell erweist es sich hier vorteilhaft, den zweiten Strömungsweg länger als den ersten Strömungsweg zu aktivieren.

## Patentansprüche

1. Verfahren zur Blasformung von Behältern (2), bei dem ein Vorformling (1) nach einer thermischen Konditionierung innerhalb einer Blasform (4) von einer Reckstange (11) gereckt und durch Blasdruckeinwirkung in den Behälter (2) umgeformt wird und bei dem unter Druck stehendes Gas durch die Reckstange (11) hindurch in den Behälter (2) eingeleitet wird, **dadurch gekennzeichnet, daß** das unter Druck stehende Gas zur Blasformung über mindestens zwei unterschiedliche Strömungswege in den Behälter (2) eingeleitet wird, wobei einer dieser Strömungswege durch die Reckstange (11) hindurch und einer der Strömungswege an der Reckstange (11) vorbei verläuft.

2. Verfahren nach Anspruch 1, **dadurch gekennzeichnet, daß** das unter Druck stehende Gas wenigstens zeitweise über nur einen der Strömungswege zugeführt wird.

3. verfahren nach Anspruch 1 oder 2, **dadurch gekennzeichnet, daß** das unter Druck stehende Gas in einer ersten Prozeßphase des Blasverfahrens in der Nähe des Mündungsabschnittes (21) in den Vorformling (1) eingeleitet wird.

4. Verfahren nach einem der Ansprüche 1 bis 3, **dadurch gekennzeichnet, daß** das unter Druck stehende Gas während der ersten Prozeßphase des Blasverfahrens durch einen die Reckstange (11) umgebenden Strömungsweg eingeleitet wird.

5. Verfahren nach einem der Ansprüche 1 bis 4, **dadurch gekennzeichnet, daß** das unter Druck stehende Gas in einer zweiten Prozeßphase des Blasverfahrens durch die Reckstange (11) hindurch eingeleitet wird.

6. Verfahren nach Anspruch 5, **dadurch gekennzeichnet, daß** das unter Druck stehende Gas während der zweiten Prozeßphase des Blasverfahrens in der Nähe eines Bodens des Behälters (2) eingeleitet wird.

7. Verfahren nach einem der Ansprüche 1 bis 6, **dadurch gekennzeichnet, daß** während der zweiten Prozeßphase des Blasverfahrens das unter Druck stehende Gas mit einem höheren Druck als während der ersten Prozeßphase des Blasverfahrens eingeleitet wird.

8. Verfahren nach einem der Ansprüche 1 bis 7, **dadurch gekennzeichnet, daß** eine Druckableitung nach einem vorhergehenden zurückziehen der Reckstange (11) durchgeführt wird.

9. Verfahren nach einem der Ansprüche 1 bis 7, **dadurch gekennzeichnet, daß** eine Druckableitung mindestens teilweise durch die Reckstange (11) hindurch erfolgt.

10. Vorrichtung zur Blasformung von Behältern (2), die mindestens eine Blasstation (3) mit mindestens einer Blasform (4) sowie mindestens einer Reckstange (11) aufweist sowie bei der die Reckstange (11) an eine Versorgungseinrichtung zur Zufuhr von unter Druck stehendem Gas angeschlossen ist, **dadurch gekennzeichnet, daß** die Blasstation (3) mindestens zwei unterschiedliche bis in den von der Blasform (4) umschlossenen Raum hinführende Strömungswege für das unter Druck stehende Gas zur Blasformung aufweist, wobei hiervon ein Strömungsweg durch die Reckstange (11) hindurch und ein Strömungsweg außenseitig an der Reckstange (11) vorbei verläuft.

11. Vorrichtung nach Anspruch 10, **dadurch gekennzeichnet, daß** mindestens zwei Strömungswege durch die Reckstange (11) hindurch verlaufen.

12. Vorrichtung nach einem der Ansprüche 10 oder 11, **dadurch gekennzeichnet, daß** ein Strömungsweg in der Nähe einer Zugangsöffnung der Blasform (4) in die Blasform (4) einmündet.

13. Vorrichtung nach einem der Ansprüche 10 bis 12, **dadurch gekennzeichnet, daß** ein Strömungsweg wenigstens zeitweise in der Nähe eines Bodenteiles (7) der Blasform (4) in einen von der Blasform (4) umschlossenen Innenraum einmündet.

14. Vorrichtung nach einem der Ansprüche 10 bis 13, **dadurch gekennzeichnet, daß** der erste Strömungsweg zur Zufuhr von Druckgas für die Behälterformung ausgebildet ist.

15. Vorrichtung nach einem der Ansprüche 10 bis 14, **dadurch gekennzeichnet, daß** der zweite Strömungsweg für die Zufuhr von Druckgas zur Behälterformung ausgebildet ist.

16. Vorrichtung nach einem der Ansprüche 10 bis 15, **dadurch gekennzeichnet, daß** mindestens zwei Strömungswege zur Zufuhr von unter Druck stehendem Gas mit unterschiedlichen Druckhöhen ausgebildet sind.

17. Vorrichtung nach einem der Ansprüche 10 bis 16, **dadurch gekennzeichnet, daß** die Reckstange (11) einen von Seitenwandungen umschlossenen Innenraum aufweist und daß der Innenraum durch eine Mehrzahl von Ausnehmungen in der Wandung an eine Druckgasversorgung angeschlossen ist.

18. Vorrichtung nach einem der Ansprüche 10 bis 17, **dadurch gekennzeichnet, daß** im Bereich jedes Strömungsweges mindestens ein Stellelement zur Realisierung einer Ventilfunktion angeordnet ist.

## Claims

1. Process for blow moulding of containers (2), wherein a preform (1) is stretched within a blow mould (4) by a stretching rod (11) after a thermal conditioning and is reshaped into the container (2) by the action of blowing pressure, and wherein pressurised gas is introduced into the container (2) through the stretching rod (11), **characterised in that** the pressurised gas for blow moulding is introduced into the container (2) via at least two different flow paths, one of these flow paths extending through the stretching rod (11), and one of the flow paths extending past the stretching rod (11).

2. Process according to Claim 1, **characterised in that** the pressurised gas is supplied at least temporarily via only one of the flow paths.

3. Process according to Claim 1 or 2, **characterised in that** in a first phase of the blowing process the pressurised gas is introduced into the preform (1) in the vicinity of the orifice portion (21).

4. Process according to one of Claims 1 to 3, **characterised in that** during the first phase of the blowing process the pressurised gas is introduced through a flow path surrounding the stretching rod (11).

5. Process according to one of Claims 1 to 4, **characterised in that** in a second phase of the blowing process the pressurised gas is introduced through the stretching rod (11).

6. Process according to Claim 5, **characterised in that** during the second phase of the blowing process the pressurised gas is introduced in the vicinity of a base of the container (2).

7. Process according to one of Claims 1 to 6, **characterised in that** during the second phase of the blowing process the pressurised gas is introduced at a higher pressure than during the first phase of the blowing process.

8. Process according to one of Claims 1 to 7, **characterised in that** a dissipation of pressure is carried out after a preceding retraction of the stretching rod (11).

9. Process according to one of Claims 1 to 7, **characterised in that** a dissipation of pressure is effected at least partly through the stretching rod (11) .

10. Apparatus for blow moulding of containers (2), which exhibits at least one blowing station (3) with at least one blow mould (4) and with at least one stretching rod (11) and in which the stretching rod (11) is connected to a supply device for supplying pressurised gas, **characterised in that** the blowing station (3) exhibits at least two different flow paths for the pressurised gas for blow moulding, said flow paths leading into the space surrounded by the blow mould (4), one flow path extending through the stretching rod (11) and one flow path extending past the stretching rod (11) on the outside.

11. Apparatus according to Claim 10, **characterised in that** at least two flow paths extend through the stretching rod (11).

12. Apparatus according to either of Claims 10 or 11, **characterised in that** one flow path in the vicinity of an access opening in the blow mould (4) discharges into the blow mould (4).

13. Apparatus according to one of Claims 10 to 12, **characterised in that** one flow path at least temporarily in the vicinity of a base part (7) of the blow mould (4) discharges into an interior space surrounded by the blow mould (4).

14. Apparatus according to one of Claims 10 to 13, **characterised in that** the first flow path is designed for supplying compressed gas for the container moulding.

15. Apparatus according to one of Claims 10 to 14, **characterised in that** the second flow path is designed for the supply of compressed gas for container moulding.

16. Apparatus according to one of Claims 10 to 15, **characterised in that** at least two flow paths are designed for supplying pressurised gas having different pressure heads.

17. Apparatus according to one of Claims 10 to 16, **characterised in that** the stretching rod (11) exhibits an interior space surrounded by side walls and **in that** the interior space is connected to a compressed-gas supply by a plurality of recesses in the wall.

18. Apparatus according to one of Claims 10 to 17, **characterised in that** at least one actuating element for realising a valve function is arranged in the region of each flow path.

## Revendications

1. Procédé de moulage par soufflage de récipients (2), dans lequel une préforme (1), après un conditionnement thermique à l'intérieur d'un moule de soufflage (4), est étirée par une tige d'étirage (11) et transformée en un récipient (2) sous l'effet de la pression de soufflage, et dans lequel du gaz sous pression est conduit dans le récipient (2), à travers la tige d'étirage (11), **caractérisé en ce que,** pour le moulage par soufflage, le gaz sous pression est introduit dans le récipient (2) par au moins deux voies d'écoulement différentes, l'une de ces voies d'écoulement s'étendant à travers la tige d'étirage (11) et l'autre voie d'écoulement passant à côté de la tige d'étirage (11).

2. Procédé selon la revendication 1, **caractérisé en ce que** le gaz sous pression est amené, au moins temporairement, par seulement l'une des voies d'écoulement.

3. Procédé selon revendication 1 ou 2, **caractérisé en ce que** le gaz sous pression est introduit dans la préforme (1) à proximité d'une section de débouché (21), au cours d'une première phase opérationnelle du processus de soufflage.

4. Procédé selon l'une des revendications 1 à 3, **caractérisé en ce que** le gaz sous pression est introduit, au cours d'une deuxième phase opérationnelle du processus de soufflage, par une voie d'écoulement entourant la tige d'étirage (11).

5. Procédé selon l'une des revendications 1 à 4, **caractérisé en ce que** le gaz sous pression est introduit à travers la tige d'étirage (11), au cours d'une deuxième phase opérationnelle du processus de soufflage.

6. Procédé selon la revendication 5, **caractérisé en ce que** le gaz sous pression est introduit à proximité d'un fond du récipient (2), au cours de la deuxième phase opérationnelle du processus de soufflage.

7. Dispositif selon l'une des revendications 1 à 6, **caractérisé en ce que**, pendant la deuxième phase opérationnelle du processus de soufflage, le gaz sous pression est introduit à une pression plus élevée que pendant la première phase opérationnelle du processus de soufflage.

8. Procédé selon l'une des revendications 1 à 7, **caractérisé en ce qu'**une dérivation de la pression est effectuée après un retrait préalable de la tige d'étirage (11).

9. Procédé selon l'une des revendications 1 à 7, **caractérisé en ce qu'**une dérivation de la pression a lieu, au moins partiellement, à travers la tige d'étirage (11).

10. Dispositif pour le moulage par soufflage de récipients (2), qui présente au moins un poste de soufflage (3), avec au moins un moule de soufflage (4), ainsi qu'au moins une tige d'étirage (11), et dans lequel la tige d'étirage (11) est raccordée à un dispositif d'alimentation pour l'amenée de gaz sous pression, **caractérisé en ce que** le poste de soufflage (3) présente au moins deux différentes voies d'écoulement pour le gaz sous pression pour le moulage par soufflage, qui conduisent jusqu'à l'espace ceint par le moule de soufflage (4), l'une de ces voies d'écoulement s'étendant à travers la tige d'étirage (11) et l'autre voie d'écoulement passant, vers l'extérieur, à côté de la tige d'étirage (11).

11. Dispositif selon la revendication 10, **caractérisé en ce que** deux voies d'écoulement au moins passent à travers la tige d'étirage (11).

12. Dispositif selon l'une des revendications 10 ou 11, **caractérisé en ce qu'**une voie d'écoulement débouche dans le moule de soufflage (4), à proximité d'une ouverture d'admission du moule de soufflage (4).

13. Dispositif selon l'une des revendications 10 à 12, **caractérisé en ce qu'**une voie d'écoulement débouche, au moins temporairement, à proximité d'une pièce de fond (7) du moule de soufflage (4), dans une chambre interne, ceinte par le moule de soufflage (4).

14. Dispositif selon l'une des revendications 10 à 13, **caractérisé en ce que** la première voie d'écoulement est conçue pour l'amenée de gaz comprimé pour le moulage par soufflage de récipients.

15. Dispositif selon l'une des revendications 10 à 14, **caractérisé en ce que** la deuxième voie d'écoulement est conçue pour l'amenée de gaz comprimé pour le moulage par soufflage de récipients.

16. Dispositif selon l'une des revendications 10 à 15, **caractérisé en ce que** deux voies d'écoulement au moins sont conçues pour l'amenée de gaz comprimé, à des hauteurs de pressions différentes.

17. Dispositif selon l'une des revendications 10 à 16, **caractérisé en ce que** la tige d'étirage (11) présente un espace intérieur entouré de parois latérales, et que ledit espace intérieur est raccordé à une alimentation en gaz comprimé, par plusieurs évidements pratiqués dans la paroi.

18. Dispositif selon l'une des revendications 10 à 17, **caractérisé en ce que**, dans la région de chaque voie d'écoulement, est disposé au moins un élément de réglage pour la réalisation d'une fonction de soupape.
